# EUROPEAN PATENT SPECIFICATION

(11) **EP 3 581 504 B1**
(45) Date of publication and mention of the grant of the patent: **08.09.2021**
(21) Application number: 18751306.4
(22) Date of filing: 06.02.2018
(51) Int. Cl.: B65B 23/08, A01K 43/00, B65G 43/08, B65G 47/34, B65G 47/86

(54) **EGG PROCESSING APPARATUS**
EIVERARBEITUNGSVORRICHTUNG
APPAREIL DE TRAITEMENT D'OEUF

(30) Priority: 13.02.2017 JP 2017023952
(43) Date of publication of application: 18.12.2019
(73) Proprietor: Nabel Co., Ltd., Kyoto-shi Kyoto 601-8444 (JP)
(72) Inventor: KIYOTA, Akio, Kyoto-shi Kyoto 601-8444 (JP)
(74) Representative: Prüfer & Partner mbB Patentanwälte · Rechtsanwälte
(86) International application number: PCT/JP2018/003951
(87) International publication number: WO 2018/147259

(56) References cited:
- EP-A1- 0 684 195
- EP-A1- 0 684 195
- JP-A- H0 243 128
- JP-A- H0 243 128
- JP-A- H1 016 913
- JP-A- H1 016 913
- JP-A- 2004 250 043
- JP-A- 2008 296 957
- KR-B1- 101 332 272

## Description

### TECHNICAL FIELD

The present invention relates to an egg handling apparatus which handles eggs by changing an egg releasing position depending on an egg transporting speed, and a control device which controls the egg handling apparatus.

### BACKGROUND ART

Eggs that have been aligned, weighed, and the like are conveyed in a row toward a downstream side while being held by holding members that are equally spaced and thus attached to a transporting conveyor. These eggs are then released from the holding members at a predetermined releasing position towards egg receiving holes (e.g., a bucket or a tray, etc.) which open upward.

The released eggs fall while drawing different parabolas depending on the egg transporting speed, and accordingly, it is necessary to change the egg releasing position. The speed of conveying eggs held by the holding members varies from moment to moment for example: while a stopped state transitions to a predetermined speed; when conveying at the predetermined speed is stopped; when from the stopped state, conveyance is resumed; and the like. However, an egg handling apparatus has been required to reliably drop an egg into an egg receiving hole regardless of the egg transporting speed.

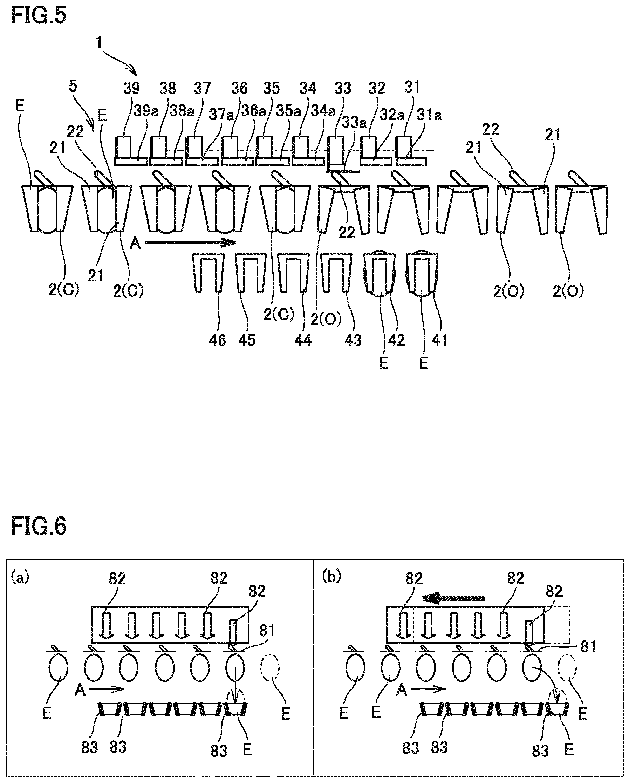

PTD 1 discloses an egg handling apparatus comprising a plurality of holding members 81 that are equidistantly attached to a transporting conveyor and hold eggs E, and a plurality of shooting mechanisms 82 that switch the states of holding members 81 to release eggs E from holding members 81 toward the plurality of egg receiving holes 83, as schematically shown in Fig. 6.

These shooting mechanisms 82 are unitized such that they are equal in number to the number of egg receiving holes 83. The egg handling apparatus further comprises a shift mechanism for moving the unitized shooting mechanism 82 toward an upstream side in a direction A of transporting holding members 81.

This allows the position of shooting mechanism 82 to be changed mechanically via the shift mechanism depending on a varying transporting speed. This can adjust a timing of switching holding member 81 from a holding position to a releasing position and thus accommodate both the transporting conveyor moving at a low speed, as shown in Fig. 6(a), and the transporting conveyor moving at a high speed, as shown in Fig. 6(b).

### CITATION LIST

### PATENT DOCUMENTS

PTD 1: Japanese Patent Laying-Open No. 59-32984
PTD 2: Japanese Patent Laying-Open No. 1-308711
PTD 3: European Patent Laying Open No. 0 684 195 A1
PTD 4: Japanese Patent Laying-Open No. H02 43128 A
PTD 5: Japanese Patent Laying-Open No. H10 16913 A
PTD 6: Korean Patent No. 101 332 272 B1

### SUMMARY OF INVENTION

### TECHNICAL PROBLEM

What comprises a shift mechanism, as disclosed in PTD 1, requires some solution against a cost or maintenance work increased due to comprising the shift mechanism.

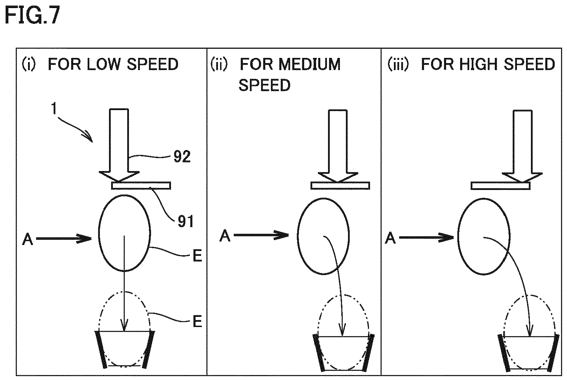

As an egg handling apparatus without a shift mechanism, an egg handling apparatus proposed by the present applicant in PTD 2 is also known. As schematically shown in Fig. 7, this egg handling apparatus has an abutment portion in which a holding member 91 extends parallel to transporting direction A, and against which portion of the abutment portion a shooting mechanism 92 abuts is determined depending on the conveying speed (ranging from a low speed (i) to a high speed (iii)). That is, the timing of switching holding member 91 from the holding position to the releasing position is adjusted using an abutment portion having a predetermined size in order to accommodate a varying transporting speed.

While the egg handling apparatus of PTD 2 can accommodate a case with the holding member conveyed at a speed within a predetermined range, the apparatus cannot release eggs when the speed exceeds the predetermined range as recent machinery is increased in speed.

PTD3 discloses an apparatus comprising a conveyor having a number of article holders conveyable in the direction of travel, each article holder comprising an operating cam by means of which the article holder can be brought from a retaining position into a releasing position, the apparatus comprising a number of stops, each stop being movable substantially perpendicularly to the direction of travel under the influence of an exciting element, which stops in a downward position operate the operating cams and in an upward position allow the operating cams to pass freely, the stops being arranged for displacement in the direction of travel depending on the speed of the conveyor, as a result of which the stop point between the operating cam and the stop and hence the point at which the article in the relevant holder is released is displaceable, the exciting elements being fixedly arranged and each comprising a plunger, movable perpendicularly to the direction of travel, by means of which the position of a corresponding stop can be controlled.

PTD4 relates to a control device to enable disposed articles to fall in the specified place accurately by providing a driving means driven on the basis of the signals from a control device for a conveyor. In accordance with the disclosure, a control device designates a packing container such as a tray or the like according to the sizes by weight of eggs as well as the accommodated set of the packing container. The control device further sends out necessary signals to a motor and a solenoid in response to the timing of the operation and stoppage of the motor of a driving means and the operation of the solenoid prememorized from the carrier speed of a conveyor, the fall distance of disposed articles, and the like. Accordingly, the eggs discharged from a bucket at the shifting time of the startup and stoppage of the conveyor fall in the specified accommodated place of the specified container accurately and safely.

PTD5 discloses a packing station comprising a transfer device and a container conveyer and having a plurality of stations for receiving weighed eggs supplied by a single array conveyer in a predetermined container includes a throw-in position specification switch provided on each station with one-to-one correspondence on each of holders of the transfer device which receives and discharges the eggs, and operation of an actuator which corresponds to a holder at one- to-one ratio for opening a bucket of the single array conveyer is controlled by selection of the throw-in position specification switch. Since only an actuator specified by the switch operates, the eggs are put only into desired housing seats. For example, the eggs can be put into all of the seats, or packing with a desired line empty is possible.

PTD6 relates to a transfer device of an egg insertion control system for automatically selecting and packing eggs capable of improving productivity and reliability of products by simplifying a transferring structure for settling eggs at buckets conveying eggs selected by grade while preventing the malfunction of transfer. The transfer device comprises an oscillating means including a guide rail formed at one side of casing and a guide roller mounted at the guide rail for oscillating along the guide rail; and an operating means controlling the transfer cap to rotate in 90 degree in the rotating process of the transfer cap by the operating bracket combined by the guide roller while the guide roller is oscillating along the guide rail when the transfer cap is rotating through installing an operating bracket at a supporting bracket where the transfer cap is mounted for one end part to be combined at the guide roller of the oscillating means in the transfer device of the egg insertion control system for automatically selecting and packing eggs for settling the eggs at the bucket attached at a chain conveyor while controlling a transfer cap to rotate at 90 degree.

It is therefore an object of the present invention to provide an egg handling apparatus capable of releasing an egg toward a predetermined egg receiving hole depending on the egg transporting speed without requiring a shift mechanism for moving a shooting mechanism depending on the transporting speed. Another object of the present invention is to provide a control device to control such an egg handling apparatus.

### SOLUTION TO PROBLEM

The invention provides an egg handling apparatus according to claim 1.

In the egg handling apparatus, preferably, a first egg receiving hole having a function of receiving an egg and a function of releasing the received egg further downward is disposed at each of the first number of target positions.

Furthermore, in the egg handling apparatus, preferably, a second egg receiving hole is disposed at each of the first number of target positions for receiving an egg, and the egg handling apparatus further comprises a conveyor unit to transport the second egg receiving hole.

Furthermore, in the egg handling apparatus, preferably, the second number of shooting mechanisms are each fixed to a frame of the transporting conveyor.

Furthermore, the egg handling apparatus further comprises a control unit configured to determine a shooting mechanism of the second number of shooting mechanisms to be operated based on a transporting speed of the holding members attached to the transporting conveyor.

### ADVANTAGEOUS EFFECTS OF INVENTION

The present invention can thus provide an egg handling apparatus capable of releasing an egg toward a predetermined egg receiving hole depending on the egg transporting speed without requiring a shift mechanism for moving a shooting mechanism depending on the transporting speed.

### BRIEF DESCRIPTION OF DRAWINGS

Fig. 1 is a schematic side view showing a main part of an egg handling apparatus according to one embodiment of the present invention.
Fig. 2 is a side view schematically showing an operation of the egg handling apparatus according to the same embodiment at a low speed.
Fig. 3 is a side view schematically showing an operation of the egg handling apparatus according to the same embodiment at a medium speed.
Fig. 4 is a side view schematically showing an operation of the egg handling apparatus according to the same embodiment at a high speed.
Fig. 5 is a schematic side view showing a main part of the egg handling apparatus according to the same embodiment in a modification.
Fig. 6 is a schematic side view showing a main part of a conventional egg handling apparatus.
Fig. 7 is a schematic side view showing a main part of another conventional egg handling apparatus.

### DESCRIPTION OF EMBODIMENTS

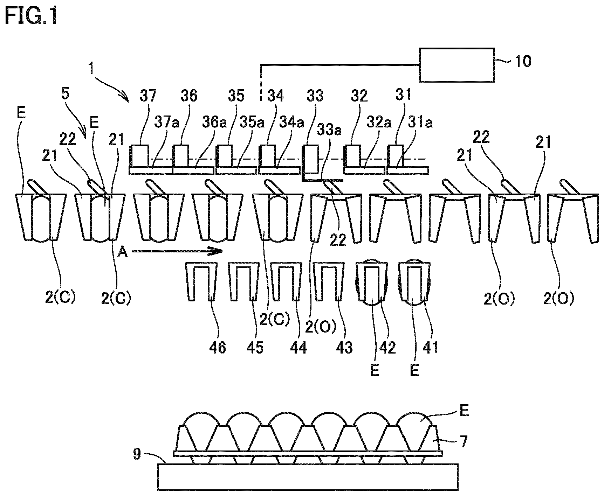

Hereinafter, an embodiment of the present invention will be described with reference to Figs. 1 to 4. An egg handling apparatus 1 according to the present embodiment is used as a part of an egg grading and collecting apparatus called a grader or as a part of an egg E packing apparatus called a farm packer. Eggs E transferred from a supplying conveyor (not shown) are conveyed in a direction A on a single-row transporting conveyor 5 having a plurality of mutually spaced holding members 2 attached thereto for holding eggs E, with each egg E having a longitudinal axis in the vertical direction, and are thus directed to egg handling apparatus 1.

Egg handling apparatus 1 includes a plurality of holding members 2, and a plurality of shooting mechanisms 31, 32, 33, 34, 35, 36, 37. The plurality of holding members 2 are mutually spaced and thus attached to transporting conveyor 5. The plurality of shooting mechanisms 31 to 37 are disposed in the transporting direction of transporting conveyor 5. The plurality of shooting mechanisms 31 to 37 allow the eggs held by the plurality of holding members 2 to be released toward a plurality of target positions, respectively, located along the transporting direction. For example, six target positions are set. Egg handling apparatus 1 has six egg receiving holes 41, 42, 43, 44, 45, 46, disposed at the target positions. The number of shooting mechanisms 31 to 37 is set to be larger than the number of egg receiving holes 41 to 46 (or target positions), and in this embodiment, there are seven shooting mechanisms.

When eggs E held by the plurality of holding members 2 are released toward egg receiving holes 41 to 46 (or target positions), in a first state in which transporting conveyor 5 is moved at a first speed, seven shooting mechanisms 31 to 37 have six shooting mechanisms located upstream as counted from shooting mechanism 31 in the transporting direction, i.e., shooting mechanisms 31 to 36, operated for six egg receiving holes 41 to 46 (or target positions) to sequentially release eggs E initially to egg receiving hole 41 located downstream in the transporting direction and then sequentially toward egg receiving hole 46 located upstream in the transporting direction.

In a second state in which transporting conveyor 5 is moved at a second speed higher than the first speed, seven shooting mechanisms 31 to 37 have six shooting mechanisms located upstream in the transporting direction as counted from a shooting mechanism 32 disposed upstream of shooting mechanism 31 in the transporting direction, i.e., shooting mechanisms 32 to 37, operated for six egg receiving holes 41 to 46 (or target positions) to sequentially release eggs E initially to egg receiving hole 41 located downstream in the transporting direction and then sequentially toward egg receiving hole 46 located upstream in the transporting direction.

Egg receiving holes 41 to 46 have a function of receiving eggs E released from transporting conveyor 5 and a function of releasing the received eggs downward. The eggs released from egg receiving holes 41 to 46 are received in a packing container 7. Packing container 7 is placed on a container conveyor 9. Packing container 7 having eggs contained therein is conveyed by container conveyor 9, for example, in a direction traversing transporting direction A.

Holding members 2 are mutually spaced and thus attached to a chain (not shown) of transporting conveyor 5. Holding member 2 is movable with respect to a frame (not shown) extending in transporting direction A. Specifically, each holding member 2 is a bucket including a pair of bucket pieces 21 that hold egg E from below. Each holding member 2 is provided with an opening tab 22 against which shooting mechanisms 31 to 37 abut for releasing a holding state (C) of holding member 2. When opening tab 22 is operated, holding member 2 is opened, and egg E is released downward and thus shot into egg receiving hole 41 to 46.

Shooting mechanisms 31 to 37 are mutually spaced and thus attached to a frame of transporting conveyor 5, and thus fixed thereto. Specifically, each shooting mechanism 31 to 37 is a rotary solenoid provided with a shutter 31a, 32a, 33a, 34a, 35a, 36a, 37a for operating opening tab 22. Shutters 31a to 37a are each shaped to be a plate extending in transporting direction A of holding members 2. Each opening tab 22 is operated to release egg E from holding member 2 by one of shooting mechanisms 31 to 37 having shutter 31a to 37a abutting against opening tab 22 of one holding member 2.

In the present embodiment, seven shooting mechanisms 31 to 37 are aligned in transporting direction A of holding member 2, and thus set to be larger in number by one than egg receiving holes 41 to 46 aligned in transporting direction A of holding members 2, which will be described hereinafter. In other words, not all shooting mechanisms are used for any transporting speed as conventional. The number of shooting mechanisms 31 to 37 is set to be larger than the number of egg receiving holes 41 to 46 (or target positions). Shooting mechanisms 31 to 37 are disposed at positions where eggs can be sequentially released from holding members 2 toward egg receiving holes 41 to 46 (or six target positions) depending on the transporting speed of transporting conveyor 5.

In particular, in the present embodiment, shooting mechanisms 31 to 37 include low speed shooting mechanism 31 used only when the transporting speed of holding member 2 is slow and high speed shooting mechanism 37 used only when the transporting speed of holding member 2 is fast. Low speed shooting mechanism 31 is disposed at a position corresponding to egg receiving hole 41 located most downstream in transporting direction A of holding members 2. High speed shooting mechanism 37 is disposed further upstream than a position corresponding to egg receiving hole 46 located most upstream in transporting direction A of holding members 2.

Upstream of shooting mechanisms 31 to 37 in transporting direction A, a determination unit (not shown) is provided to detect and determine egg E to be released. Furthermore, a pulse generator (not shown) is attached to transporting conveyor 5 to constantly detect the transporting speed of transporting conveyor 5. The pulse generator outputs a pulse signal, which also corresponds to the position of egg E.

Egg handling apparatus 1 is provided with a control unit 10 for operating shooting mechanisms 31 to 37 based on information from the determination unit and the pulse generator. Control unit 10 is a microcomputer system having a processor, a memory, an input interface, an output interface, and the like. Control unit 10 may be physically integrated with egg handling apparatus 1 or may be physically discrete from egg handling apparatus 1.

Control unit 10 of the present embodiment determines, based on the transporting speed of holding member 2, which one of the seven shooting mechanisms 31 to 37 should be operated to release eggs towards the six egg receiving holes 41 to 46. More specifically, control unit 10 obtains the transporting speed of holding members 2 from a pulse output state read at a pulse memory unit every predetermined time, and calculates releasing positions X1, X2, X3, X4, X5, X6 corresponding to the transporting speed. Then, one of shooting mechanisms 31 to 37 which can correspond to releasing positions X1 to X6 is determined and operated. Note that releasing positions X1, X2, X3, X4, X5, X6 are positions for shooting eggs E into egg receiving holes 41, 42, 43, 44, 45, 46, respectively, and are aligned from the downstream side in the stated order. In the present embodiment, a distance between adjacent ones of releasing positions X1 to X6 is set to be equal to a distance between adjacent ones of egg receiving holes 41 to 46.

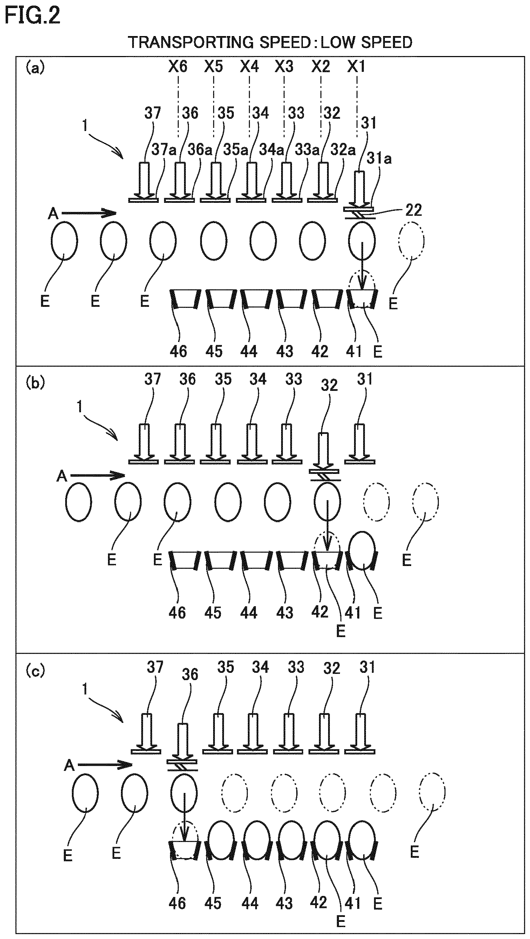

For example, for low speed, releasing positions X1 to X6 are positions substantially directly above egg receiving holes 41 to 46. For low speed, as shown in Fig. 2, control unit 10 operates shooting mechanisms 31 to 36 in an order of shooting mechanism 31 followed by shooting mechanism 32 followed by shooting mechanism 33 followed by shooting mechanism 34 followed by shooting mechanism 35 followed by shooting mechanism 36. That is, of the seven shooting mechanisms 31 to 37, six shooting mechanisms 31 to 36 that can correspond to releasing positions X1 to X6 are sequentially operated to cause holding members 2 to sequentially release eggs initially to egg receiving hole 41 located downstream in transporting direction A and then sequentially toward egg receiving hole 46 located upstream in the transporting direction. Fig. 2(a) shows shooting mechanism 31 operated to cause shutter 31a to abut against opening tab 22 to release egg E toward egg receiving hole 41. Fig. 2(b) shows shooting mechanism 32 operated to cause shutter 32a to abut against opening tab 22 to release egg E toward egg receiving hole 42. Fig. 2(c) shows shooting mechanism 36 operated to cause shutter 36a to abut against opening tab 22 to release egg E toward egg receiving hole 46.

Releasing positions X1 to X6 for the medium speed and the high speed are located upstream of releasing positions X1 to X6 for low speed by the distance of a correction value corresponding to the transporting speed. In other words, depending on the change of the transporting speed of holding member 2, the correction value assumes a value (including 0) corresponding to the transporting speed, and releasing positions X1 to X6 change, corresponding to the correction value. Noted that the medium speed is a speed being accelerated toward a predetermined speed or decelerated from the predetermined speed. The high speed is the predetermined speed.

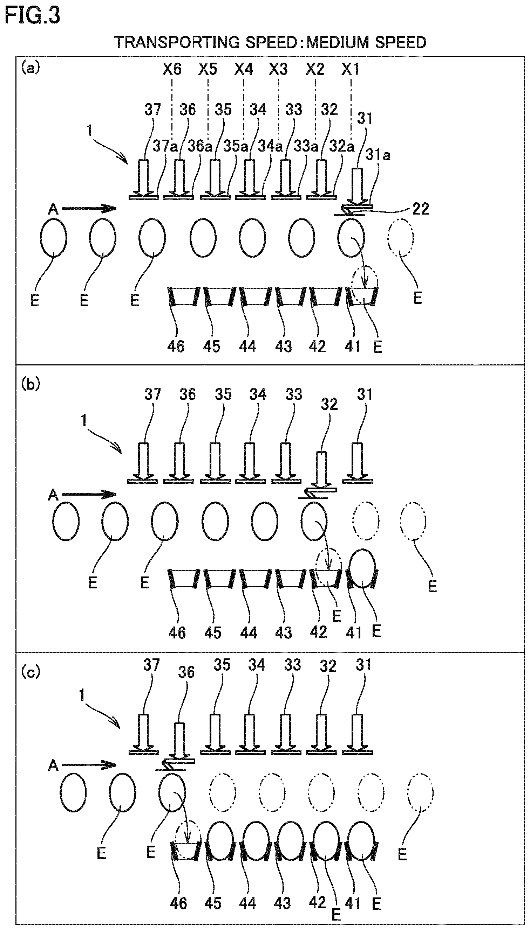

For the medium speed, as shown in Fig. 3, of the seven shooting mechanisms 31 to 37, six shooting mechanisms that can correspond to releasing positions X1 to X6, as determined based on the transporting speed, are sequentially operated to cause holding members 2 to sequentially release eggs initially to egg receiving hole 41 located downstream in transporting direction A and then sequentially toward egg receiving hole 46 located upstream in the transporting direction. Fig. 3(a) shows shooting mechanism 31 operated to cause shutter 31a to abut against opening tab 22 to release egg E toward egg receiving hole 41. Fig. 3(b) shows shooting mechanism 32 operated to cause shutter 32a to abut against opening tab 22 to release egg E toward egg receiving hole 42. Fig. 3(c) shows shooting mechanism 36 operated to cause shutter 36a to abut against opening tab 22 to release egg E toward egg receiving hole 46.

Note that for some transporting speed, when shooting mechanisms 31 to 37 are operated, one of shutters 31a to 37a may abut against opening tabs 22 of a plurality of adjacent holding members 2 conveying eggs and may switch the plurality of adjacent holding members 2 to a releasing position (O). To address this, shooting mechanisms 31 to 37 may be operated so that timing is slightly shifted to shoot eggs toward positions deviating from the centers of egg receiving holes 41 to 46, since egg receiving holes 41 to 46 each have a shape gradually spread upward, and even if eggs fall to positions deviating from the centers of egg receiving holes 41 to 46, the eggs fall along the shape of egg receiving holes 41 to 46 and are thus accommodated in a desired position.

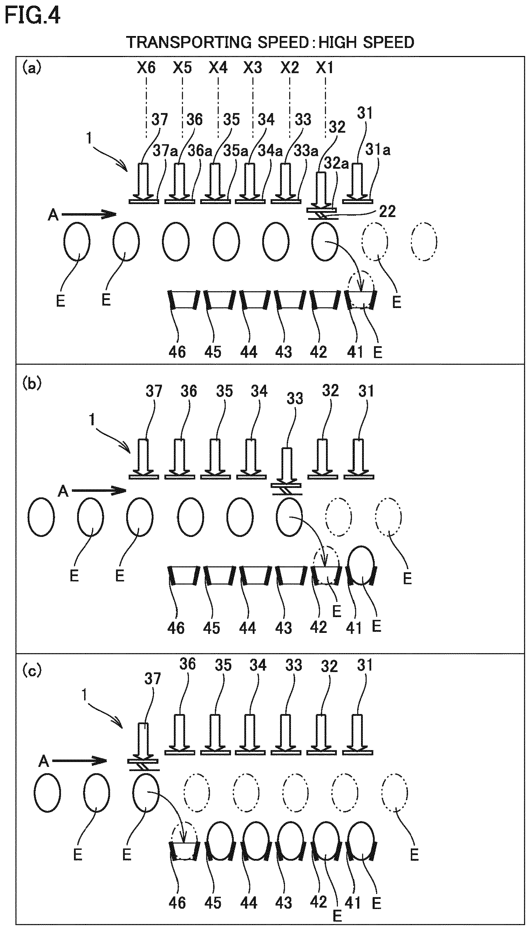

For high speed, as shown in Fig. 4, control unit 10 operates shooting mechanisms 32 to 37 in an order of shooting mechanism 32 followed by shooting mechanism 33 followed by shooting mechanism 34 followed by shooting mechanism 35 followed by shooting mechanism 36 followed by shooting mechanism 37. That is, of the seven shooting mechanisms 31 to 37, six shooting mechanisms 32 to 37 that can correspond to releasing positions X1 to X6 are sequentially operated to cause holding members 2 to sequentially release eggs initially to egg receiving hole 41 located downstream in transporting direction A and then sequentially toward egg receiving hole 46 located upstream in the transporting direction. Fig. 4(a) shows shooting mechanism 32 operated to cause shutter 32a to abut against opening tab 22 to release egg E toward egg receiving hole 41. Fig. 4(b) shows shooting mechanism 33 operated to cause shutter 33a to abut against opening tab 22 to release egg E toward egg receiving hole 42. Fig. 4(c) shows shooting mechanism 37 operated to cause shutter 37a to abut against opening tab 22 to release egg E toward egg receiving hole 46.

Hereinafter, a method for handling egg E using egg handling apparatus 1 according to the present embodiment will be described. Note that how egg handling apparatus 1 is generally controlled, such as, for example, grasping a transporting position of holding member 2 as transporting conveyor 5 transports it, is well-known and accordingly, will not be described.

When the determination unit captures and determines holding member 2 holding egg E to be released, control unit 10 determines, based on determination information obtained from the determination unit and previously stored information of a previous egg (i.e., which one of egg receiving holes 41 to 46 receives an egg E determined before the currently determined egg E), which one of egg receiving holes 41 to 46 currently receives an egg, that is, which one of releasing positions X1 to X6 is to be used.

Further, control unit 10 calculates a correction value based on the transporting speed of holding member 2, and determines releasing positions X1 to X6 corresponding to the correction value. Note that the transporting speed of transporting conveyor 5 holding eggs E in holding members 2 and sequentially conveying them is determined by whether the pulse generator (not shown) outputs pulses at long intervals (of time) or short intervals (of time). The intervals at which the pulses are output vary with the transporting speed. For example, for low transporting speed, pulses are output at long intervals. In contrast, for high transporting speed, pulses are output at short intervals. States of pulses output are sequentially stored to a pulse memory unit of control unit 10 in an order in which they are input.

When egg E to be currently released is determined and releasing position X1 to X6 to receive egg E is determined, control unit 10 determines one of shooting mechanisms 31 to 37 that can correspond to that releasing position X1 to X6, and control unit 10 operates that shooting mechanism. Specifically, whenever a pulse signal corresponding to transportation of egg E is received, control unit 10 calculates a determined egg E's position and also calculates a distance between the determined egg E's position and releasing position X1 to X6. When there is no longer any distance between the two points, control unit 10 outputs a command to a selected one of shooting mechanisms 31 to 37 for operation.

As has been described above, egg handling apparatus 1 of the present embodiment includes a plurality of holding members 2 and a plurality of shooting mechanisms 31 to 37. The plurality of holding members 2 are mutually spaced and thus attached to transporting conveyor 5. The plurality of shooting mechanisms 31 to 37 are disposed in the transporting direction of transporting conveyor 5. The plurality of shooting mechanisms 31 to 37 allow the eggs held by the plurality of holding members 2 to be released toward a plurality of target positions, respectively, located along the transporting direction. For example, six target positions are set. At the target positions, six egg receiving holes 41 to 46 are disposed. The number of shooting mechanisms 31 to 37 is seven, which is larger than the number of egg receiving holes 41 to 46 (or target positions). The seven shooting mechanisms release eggs E held by the plurality of holding members 2 toward egg receiving holes 41 to 46, respectively.

In other words, egg handling apparatus 1 of the present embodiment comprises a plurality of holding members 2, a transfer device in which egg receiving holes 41 to 46 are located, and a plurality of shooting mechanisms 31 to 37. The transfer device includes egg receiving holes 41 to 46 having a function of receiving eggs and a function of releasing the received eggs further downward. Shooting mechanisms 31 to 37 switch the position of holding member 2 from the holding position (C) to the releasing position (O).

This allows eggs E to be released toward predetermined egg receiving holes 41 to 46 depending on the egg E transporting speed without a shift mechanism used for moving shooting mechanisms 31 to 37 depending on the transporting speed. As a result, when compared with a conventional egg handling apparatus, egg handling apparatus 1 requires a cost for an increased number of shooting mechanisms 37, however, egg handling apparatus 1 can dispense with the shift mechanism, and can, as a whole, achieve a reduced cost. Egg handling apparatus 1 without the shift mechanism can also reduce a possibility of failure and suppress a cost required for maintenance.

Further, holding member 2 is movable with respect to the frame of transporting conveyor 5. Shooting mechanisms 31 to 37 are fixed to the frame. For this reason, egg handling apparatus 1 according to the embodiment cannot smoothly accommodate all transporting speeds as a conventional egg handling apparatus having a shift mechanism can. However, devising opening tab 22 and shutters 31a to 37a in at least one of size, shape, and positional relationship allows the transporting speeds to be substantially smoothly accommodated. Thus, egg handling apparatus 1 according to the embodiment can handle eggs substantially in the same manner as a conventional egg handling apparatus provided with a shift mechanism, and furthermore, has an advantage of eliminating the shift mechanism.

In particular, in egg handling apparatus 1 according to the embodiment, shutters 31a to 37a include a portion extending parallel to transporting direction A (or an extending portion). Thus, a portion of each shutter 31a to 37a that abuts against opening tab 22 can be changed to a center portion of the extending portion of each shutter 31a to 37a, a portion of the extending portion of each shutter 31a to 37a upstream of the center portion, or a portion of the extending portion of each shutter 31a to 37a downstream of the center portion. As a result, eggs E can be released toward the plurality of egg receiving holes 41 to 46 at desired releasing positions X1 to X6 corresponding to the transporting speed, or positions in the vicinity thereof.

Further, egg handling apparatus 1 according to the embodiment comprises control unit 10 which determines, based on the transporting speed of holding members 2, which of the plurality of shooting mechanisms 31 to 37 should be operated for the plurality of egg receiving holes 41 to 46, respectively. In a conventional egg handling apparatus, an amount of movement from a reference position of a shift mechanism is determined based on the transporting speed of a holding member. In egg handling apparatus 1 according to the embodiment, in contrast, control unit 10 determines releasing positions X1 to X6 for the plurality of egg receiving holes 41 to 46, respectively, based on the transporting speed of the transporting member, and selects shooting mechanisms 31 to 37 which can correspond to releasing positions X1 to X6. As a result, even if releasing positions X1 to X6 are shifted relative to the respective positions of shooting mechanisms 31 to 37, eggs E can be released and properly accommodated in the corresponding egg receiving holes 41 to 46.

Control unit 10 (or a control device) according to the embodiment controls egg handling apparatus 1 including a plurality of holding members 2 and a plurality of shooting mechanisms 31 to 37. The plurality of holding members 2 are mutually spaced and thus attached to transporting conveyor 5 and each hold egg E. The plurality of shooting mechanisms 31 to 37 are disposed in the transporting direction of transporting conveyor 5. The plurality of shooting mechanisms 31 to 37 allow eggs E held by the plurality of holding members 2 to be released toward a plurality of target positions (or egg receiving holes 41 to 46), respectively, located in the transporting direction. The number of shooting mechanisms 31 to 37 is set to be larger than the number of target positions. When eggs E held by the plurality of holding members 2 are released toward the plurality of target positions, in a first state in which transporting conveyor 5 is moved at a first speed, the plurality of shooting mechanisms 31 to 37 have a number of shooting mechanisms equal in number to the number of the plurality of target positions and located upstream in the transporting direction as counted from shooting mechanism 31, i.e., shooting mechanisms 31 to 36, sequentially operated for the plurality of target positions. In a second state in which transporting conveyor 5 is moved at a second speed higher than the first speed, the plurality of shooting mechanisms 31 to 37 have a number of shooting mechanisms equal in number to the number of the plurality of target positions and located upstream in the transporting direction as counted from shooting mechanism 32 disposed upstream of shooting mechanism 31 in the transporting direction, i.e., shooting mechanisms 32 to 37, sequentially operated for the plurality of target positions. Eggs E can thus be handled appropriately.

The present invention is not limited to the above-described embodiment.

For example, as shown in Fig. 5, a larger number of shooting mechanisms 31 to 39 than six egg receiving holes 41 to 46 may be comprised by setting a distance between adjacent shooting mechanisms 31 to 39 to be shorter than a distance between adjacent egg receiving holes 41 to 46, for example. Such egg handling apparatus 1 can accommodate variation of the transporting speed in detail. It should be noted that the number of shooting mechanisms 31, the number of egg receiving holes 41 and the like can be variously changed.

Further, shooting mechanism 31 and the like do not need to be operated successively from downstream, and may for example be operated in an order of shooting mechanism 31 followed by shooting mechanism 32 followed by shooting mechanism 33 followed by shooting mechanism 34 followed by shooting mechanism 36 followed by shooting mechanism 37. That is, insofar as the number of shooting mechanisms 31 to 39 corresponding to the number of target positions (or egg receiving holes 41 to 46, or the like) can be operated from downstream toward upstream, a shooting mechanism which cannot correspond to a releasing position may be skipped rather than operated. Furthermore, a first shooting mechanism described above and a second shooting mechanism located upstream of the first shooting mechanism are not necessarily disposed adjacently.

Holding member 2 may be in the form of a bucket holding egg E on a lower side or in the form of fingers holding egg E on an upper side.

Shooting mechanism 31 or the like is not limited to a rotary solenoid. Furthermore, the shutter of shooting mechanism 31 and the like are not limited to the illustrated shape, either. Further, instead of forming a portion extending parallel to the transporting direction as a shutter, the shutter may be provided to the opening tab of holding member 2 and a position which abuts against the shutter may be rendered adjustable. Further, shooting mechanism 31 and the like are not limited to being fixed to the frame, and shooting mechanism 31 and the like may be movable.

Instead of placing egg receiving holes 41 to 46 at target positions, a packing container 7 may be directly disposed to accommodate eggs therein. In that case, packing container 7 may be disposed at a position where egg receiving holes 41 to 46 are disposed as shown in Fig. 1. Packing container 7 includes, for example, a container for transportation, such as a tray or an egg pack. As has been described above, packing container 7 is placed on container conveyor 9. Packing container 7 with eggs accommodated therein is conveyed by container conveyor 9, for example, in a direction traversing transporting direction A.

Furthermore, packing container 7 is disposed at each of target positions as a second egg receiving hole. Egg handling apparatus 1 may comprise container conveyor 9 to convey packing container 7.

In other words, egg handling apparatus 1 of the present embodiment comprises a plurality of holding members 2, a conveyor unit in which egg receiving holes are located, and a plurality of shooting mechanisms 31 to 37. The conveyor unit is container conveyor 9 bearing thereon packing container 7 having egg receiving holes for receiving eggs. Shooting mechanisms 31 to 37 switch the position of holding members 2 from the holding position (C) to the releasing position (O).

Transporting conveyor 5 may be of a single row or a plurality of rows. Further, in egg handling apparatus 1 of the present invention, as well as in a grading and collecting apparatus, or a so-called grader, a plurality of grading and collecting units provided for different egg sizes may be disposed on a single-row transporting conveyor, and holding member 2 and shooting mechanism 31 and the like may be used for each grading and collecting unit to shoot eggs into egg receiving holes corresponding to the grading and collecting units, respectively.

Further, it is preferable that transporting conveyor 5 include a detector to detect whether the chain is stretched. With such transporting conveyor 5, a relationship between an operation of shooting mechanism 31 or the like based on a signal of an operation command output from control unit 10 and holding member 2 actually conveyed, can be monitored appropriately.

It should be understood that the embodiments disclosed herein have been described for the purpose of illustration only and in a non-restrictive manner in any respect. The present invention is defined by the terms of the claims, rather than the description above, and is intended to include any modifications within the scope of the claims.

### INDUSTRIAL APPLICABILITY

The present invention is applicable to an egg handling apparatus which appropriately handles eggs by changing an egg releasing position depending on the egg transporting speed.

### REFERENCE SIGNS LIST

1: egg handling apparatus; 2: holding member; 31, 32, 33, 34, 35, 36, 37, 38, 39: shooting mechanism; 31a, 32a, 33a, 34a, 35a, 36a, 37a, 38a, 39a: shutter; 41, 42, 43, 44, 45, 46: egg receiving hole; 5: transporting conveyor; 7: packing container; 9: container conveyor: A: transporting direction; E: egg.

## Claims

1. An egg handling apparatus (1) comprising:
a plurality of holding members (2) mutually spaced and attached to a transporting conveyor (5), and each holding an egg (E);
a number of shooting mechanisms (31, 32, 33, 34, 35, 36, 37, 38, 39 being a second number disposed in a transporting direction (A) of the transporting conveyor (5) and allowing eggs (E) held respectively by a plurality of the holding members (2) to be released toward a number of target positions being a first number, respectively, located in the transporting direction (A); **characterized in that** the second number is larger than the first number and the egg handling apparatus further comprises a control device (10) configured to determine a shooting mechanism of the second number of shooting mechanisms to be operated based on a transporting speed of the holding members attached to the transporting conveyor such that
when the eggs (E) held by said plurality of the holding members (2) are released toward the first number of target positions, respectively,
in a first state in which the transporting conveyor (5) is moved at a first speed, the second number of shooting mechanisms (31, 32, 33, 34, 35, 36, 37, 38, 39) having a number of shooting mechanisms (31, 32, 33, 34, 35, 36, 37, 38, 39) equal in number to the first number of target positions and located upstream in the transporting direction (A) as counted from a first one of the second number of shooting mechanisms (31, 32, 33, 34, 35, 36, 37, 38, 39) disposed at a first position, are operated for the first number of target positions to sequentially release the eggs (E) initially to a target position downstream in the transporting direction (A) and then sequentially toward a target position upstream in the transporting direction (A),
and in a second state in which the transporting conveyor (5) is moved at a second speed higher than the first speed, the second number of shooting mechanisms (31, 32, 33, 34, 35, 36, 37, 38, 39) having a number of shooting mechanisms (31, 32, 33, 34, 35, 36, 37, 38, 39) equal in number to the first number of target positions and located upstream in the transporting direction (A) as counted from a second one of the second number of shooting mechanisms (31, 32, 33, 34, 35, 36, 37, 38, 39) disposed upstream of the first position in the transporting direction (A), are operated for the first number of target positions to sequentially release the eggs (E) initially to a target position downstream in the transporting direction (A) and then sequentially toward a target position upstream in the transporting direction (A).

2. The egg handling apparatus (1) according to claim 1, wherein a first egg receiving hole (41, 42, 43, 44, 45, 46) having a function of receiving an egg (E) and a function of releasing the received egg (E) further downward is disposed at each of the first number of target positions.

3. The egg handling apparatus (1) according to claim 1, a second egg receiving hole (7) being disposed at each of the first number of target positions for receiving an egg (E), the egg handling apparatus (1) further comprising a conveyor unit (9) to transport the second egg receiving hole (7).

4. The egg handling apparatus (1) according to claim 1, wherein the second number of shooting mechanisms (31, 32, 33, 34, 35, 36, 37, 38, 39) are each fixed to a frame of the transporting conveyor (5).

5. The egg handling apparatus (1) according to claim 1, further comprising a control unit configured to determine a shooting mechanism of the second number of shooting mechanisms (31, 32, 33, 34, 35, 36, 37, 38, 39) to be operated based on a transporting speed of the holding members (2) attached to the transporting conveyor (5).

## Patentansprüche

1. Ein Eierhandhabungsgerät (1), umfassend:
mehrere Halteelemente (2), die gegenseitig beabstandet und an einer Transportfördervorrichtung (5) angebracht sind und jedes ein Ei (E) hält;
eine Anzahl von Schussmechanismen (31, 32, 33, 34, 35, 36, 37, 38, 39), die eine zweite Anzahl sind, die in einer Transportrichtung (A) der Transportfördervorrichtung (5) angeordnet sind und die es den jeweils durch mehrere der Halteelement (2) gehaltenen Eiern (E) ermöglichen, jeweils in Richtung einer Anzahl von Zielpositionen, die eine erste Anzahl sind, die sich in der Transportrichtung (A) befinden, freigegeben zu werden,
**dadurch gekennzeichnet, dass**
die zweite Anzahl größer als die erste Anzahl ist und das Eierhandhabungsgerät ferner eine Steuerungsvorrichtung (10) umfasst, die dazu konfiguriert ist, einen zu betätigenden Schussmechanismus der zweiten Anzahl der Schussmechanismen basierend auf einer Transportgeschwindigkeit der an der Transportförderreinrichtung angebrachten Halteelemente zu bestimmen, so dass,
wenn die durch die mehreren Haltelemente (2) gehaltenen Eier (E) jeweils in Richtung der ersten Anzahl der Zielpositionen freigegeben werden,
in einem ersten Zustand, in dem die Transportfördervorrichtung (5) mit einer ersten Geschwindigkeit bewegt wird, die zweite Anzahl der Schussmechanismen (31, 32, 33, 34, 35, 36, 37, 38, 39), die eine Anzahl von Schussmechanismen (31, 32, 33, 34, 35, 36, 37, 38, 39) aufweist, die gleich der Anzahl der ersten Anzahl der Zielpositionen ist, und sich in der Transportrichtung (A) stromaufwärts, gezählt von einem ersten der zweiten Anzahl der Schussmechanismen (31, 32, 33, 34, 35, 36, 37, 38, 39), der in einer ersten Position angeordnet ist, befindet, für die erste Anzahl der Zielpositionen betrieben werden, um die Eier (E) der Reihe nach zunächst an eine Zielposition in der Transportrichtung (A) stromabwärts und dann der Reihe nach in Richtung einer Zielposition in der Transportrichtung (A) stromaufwärts freizugeben, und
in einem zweiten Zustand, in dem die Transportfördervorrichtung (5) mit einer zweiten Geschwindigkeit, die höher als die erste Geschwindigkeit ist, bewegt wird, die zweite Anzahl der Schussmechanismen (31, 32, 33, 34, 35, 36, 37, 38, 39), die eine Anzahl von Schussmechanismen (31, 32, 33, 34, 35, 36, 37, 38, 39) aufweist, die gleich der Anzahl der ersten Anzahl der Zielpositionen ist, und sich in der Transportrichtung (A) stromaufwärts, gezählt von einem zweiten der zweiten Anzahl der Schussmechanismen (31, 32, 33, 34, 35, 36, 37, 38, 39), der in der Transportrichtung (A) stromaufwärts der ersten Position angeordnet ist, befindet, für die erste Anzahl der Zielpositionen betrieben werden, um die Eier (E) der Reihe nach zunächst an eine Zielposition in der Transportrichtung (A) stromabwärts und dann der Reihe nach in Richtung einer Zielposition in der Transportrichtung (A) stromaufwärts freizugeben.

2. Das Eierhandhabungsgerät (1) nach Anspruch 1, wobei eine erste Eiaufnahmeöffnung (41, 42, 43, 44, 45, 46), die eine Funktion des Aufnehmens eines Eies (E) und eine Funktion des Freigebens des aufgenommenen Eies (E) weiter abwärts aufweist, an jeder der ersten Anzahl der Zielpositionen angeordnet ist.

3. Das Eierhandhabungsgerät (1) nach Anspruch 1, wobei eine zweite Eiaufnahmeöffnung (7) an jeder der ersten Anzahl der Zielpositionen zum Aufnehmen eines Eies (E) angeordnet ist, wobei das Eihandhabungsgerät (1) ferner eine Fördereinheit (9) umfasst, um die zweite Eiaufnahmeöffnung (7) zu transportieren.

4. Das Eierhandhabungsgerät (1) nach Anspruch 1, wobei die zweite Anzahl der Schussmechanismen (31, 32, 33, 34, 35, 36, 37, 38, 39) jeweils an einem Rahmen der Transportfördervorrichtung (5) fixiert sind.

5. Das Eierhandhabungsgerät (1) nach Anspruch 1, ferner umfassend eine Steuerungseinheit, die dazu konfiguriert ist, einen zu betreibenden Schussmechanismus der zweiten Anzahl der Schussmechanismen (31, 32, 33, 34, 35, 36, 37, 38, 39) basierend auf einer Transportgeschwindigkeit der an der Transportfördereinrichtung angebrachten Haltelemente (2) zu bestimmen.

## Revendications

1. Dispositif de conditionnement d'œuf (1) comprenant :
une pluralité d'éléments de retenue (2) mutuellement espacés et fixés sur un convoyeur de transport (5) et retenant chacun un œuf (E) ;
un certain nombre, formant un second nombre, de mécanismes d'éjection (31, 32, 33, 34, 35, 36, 37, 38, 39), disposés suivant une direction de transport (A) du convoyeur de transport (5) et permettant la libération des œufs (E) maintenus respectivement par une pluralité des éléments de retenue (2) vers respectivement un certain nombre, formant un premier nombre, de positions de cible situées suivant la direction de transport (A) ;
**caractérisé en ce que** le second nombre est supérieur au premier nombre et le dispositif de conditionnement d'œuf comprend, en outre, un dispositif de commande (10) configuré de manière à déterminer un mécanisme d'éjection du second nombre de mécanismes d'éjection à commander sur la base d'une vitesse de transport des éléments de retenue fixés sur le convoyeur de transport de telle sorte que,
lorsque les œufs (E) maintenus par ladite pluralité d'éléments de retenue (2) sont libérés respectivement vers le premier nombre de positions de cible,
dans un premier état dans lequel le convoyeur de transport (5) est déplacé à une première vitesse, les mécanismes du second nombre de mécanismes d'éjection (31, 32, 33, 34, 35, 36, 37, 38, 39) comportant un nombre de mécanismes d'éjection (31, 32, 33, 34, 35, 36, 37, 38, 39) en nombre égal au premier nombre de positions de cible et situés en amont suivant la direction de transport (A) tels que comptés à partir d'un premier du second nombre de mécanismes d'éjection (31, 32, 33, 34, 35, 36, 37, 38, 39) disposés à une première position, sont commandés de manière que le premier nombre de positions de cible libèrent séquentiellement les œufs (E) initialement à une position de cible en aval suivant la direction de transport (A) et ensuite séquentiellement vers une position de cible en amont suivant la direction de transport (A),
et dans un second état dans lequel le convoyeur de transport (5) est déplacé à une seconde vitesse supérieure à la première vitesse, les mécanismes du second nombre de mécanismes d'éjection (31, 32, 33, 34, 35, 36, 37, 38, 39) comportant un nombre de mécanismes d'éjection (31, 32, 33, 34, 35, 36, 37, 38, 39) en nombre égal au premier nombre de positions de cible et situés en amont suivant la direction de transport (A) tels que comptés à partir d'un second mécanisme du second nombre de mécanismes d'éjection (31, 32, 33, 34, 35, 36, 37, 38, 39) disposés en amont de la première position suivant la direction de transport (A), sont commandés de manière que le premier nombre de positions de cible libèrent séquentiellement les œufs (E) initialement à une position de cible en aval suivant la direction de transport (A) et ensuite séquentiellement vers une position de cible en amont suivant la direction de transport (A).

2. Dispositif de conditionnement d'œuf (1) selon la revendication 1, dans lequel un premier orifice de réception d'œuf (41, 42, 43, 44, 45, 46) présentant une fonction de réception d'un œuf (E) et une fonction de libération de l'œuf reçu (E) davantage en aval est disposé au niveau de chacune du premier nombre de positions de cible.

3. Dispositif de conditionnement d'œuf (1) selon la revendication 1, un second orifice de réception d'œuf (7) étant disposé au niveau de chacune du premier nombre de positions de cible afin de recevoir un œuf (E), le dispositif de conditionnement d'œuf (1) comprenant, en outre, une unité de convoyeur (9) destinée à transporter le second orifice de réception d'œuf (7).

4. Dispositif de conditionnement d'œuf (1) selon la revendication 1, dans lequel les mécanismes du second nombre de mécanismes d'éjection (31, 32, 33, 34, 35, 36, 37, 38, 39) sont fixés chacun sur un châssis du convoyeur de transport (5).

5. Dispositif de conditionnement d'œuf (1) selon la revendication 1, comprenant, en outre, une unité de commande configurée de manière à déterminer un mécanisme d'éjection du second nombre de mécanismes d'éjection (31, 32, 33, 34, 35, 36, 37, 38, 39) à commander sur la base d'une vitesse de transport des éléments de retenue (2) fixés sur le convoyeur de transport (5).
